# EUROPEAN PATENT SPECIFICATION

(11) **EP 4 738 251 B1**
(45) Date of publication and mention of the grant of the patent: **30.09.2026**
(21) Application number: 24209874.7
(22) Date of filing: 30.10.2024
(51) Int. Cl.: G06T 7/246, G06T 7/277, G06V 20/52, G06T 7/20, G06V 10/62, G06V 10/74, G06V 10/778

(54) **CONTROLLING A LIST OF INACTIVE TRACKS USED FOR RE-IDENTIFICATION IN AN OBJECT TRACKING SYSTEM**
STEUERUNG EINER LISTE VON INAKTIVEN SPUREN ZUR WIEDERIDENTIFIZIERUNG IN EINEM OBJEKTVERFOLGUNGSSYSTEM
COMMANDE D'UNE LISTE DE PISTES INACTIVES UTILISEES POUR LA REIDENTIFICATION DANS UN SYSTEME DE POURSUITE D'OBJETS

(43) Date of publication of application: 06.05.2026
(73) Proprietor: Axis AB, 223 69 Lund (SE)
(72) Inventor: Colliander, Christian, 223 69 LUND (SE); Hasselberg, Emanuel S, 223 69 LUND (SE); Eriksson, Jonatan, 223 69 LUND (SE); Danielsson, Niclas, 223 69 LUND (SE); Rosell, Niklas, 223 69 LUND (SE); Ärlebäck, Richard, 223 69 LUND (SE); Laross, Sarah, 223 69 LUND (SE)
(74) Representative: AWA Sweden AB

(56) References cited:
- WOJKE NICOLAI ET AL: "Simple online and realtime tracking with a deep association metric", 2017 IEEE INTERNATIONAL CONFERENCE ON IMAGE PROCESSING (ICIP), IEEE, 17 September 2017 (2017-09-17), pages 3645 - 3649, XP033323255, DOI: 10.1109/ICIP.2017.8296962
- HO RUO-TSZ ET AL: "Lidar-Based Multiple Object Tracking with Occlusion Handling", 2023 IEEE/RSJ INTERNATIONAL CONFERENCE ON INTELLIGENT ROBOTS AND SYSTEMS (IROS), IEEE, 1 October 2023 (2023-10-01), pages 9043 - 9048, XP034490209, DOI: 10.1109/IROS55552.2023.10342278
- DE LANGIS KARIN ET AL: "Realtime Multi-Diver Tracking and Re-identification for Underwater Human-Robot Collaboration", 2020 IEEE INTERNATIONAL CONFERENCE ON ROBOTICS AND AUTOMATION (ICRA), IEEE, 31 May 2020 (2020-05-31), pages 11140 - 11146, XP033826647, DOI: 10.1109/ICRA40945.2020.9197308

## Description

### Technical Field

The present invention relates to object tracking and in particular to a method, system and software for controlling a list of inactive tracks used for re-identification in an object tracking system.

### Background

Object tracking systems are crucial for applications such as surveillance and autonomous vehicles, where continuous monitoring of objects in a scene is required. These systems use video feeds and algorithms to track objects across multiple frames, forming what is called an "object track." This track is built from a series of associated detections of the same object.

However, tracking may be interrupted due to occlusions, objects moving out of view, or missed detections. When this happens, the object track becomes inactive, and these inactive tracks are stored in a memory or "inactive track gallery." If the object reappears, it can be re-identified using the gallery of inactive tracks, thus preventing the creation of redundant tracks for the same object. "Simple online and realtime tracking with a deep association metric" by Wojke N. et al., IEEE ICIP 2017, relates to such tracking of objects through occlusions.

In general, "re-identification" (ReID) refers to the process of correctly identifying and associating a previously detected object with a new detection of the same object. New detections may be matched, using ReID, with inactive tracks (representing previously detected objects) by comparing feature vectors that represent the appearance or visual characteristics of the detects objects. These feature vectors are typically outputted by a convolutional neural network (CNN) trained to produce vectors that are similar for images containing the same object and dissimilar for images of different objects. A decision model assesses the feature similarity between new detections and inactive tracks by comparing the feature vectors associated with the new detections and the inactive track. A similarity score may be computed (e.g., Euclidean distance or cosine similarity), and used to take the decision whether the new detection should be matched with the inactive track or not.

However, the accuracy of the decision model decreases as the number of inactive tracks increases. For example, a CNN may have only a 70% accuracy in matching a detection in a gallery of 100 inactive tracks, but this improves to 90% when there are only five tracks. To manage this, a time limit (e.g., 5 seconds) may be used, discarding inactive tracks that have been inactive longer than the time limit to keep the gallery small and maintain accuracy.

This method works well in scenes with a moderate object density, where the number of inactive tracks remains manageable. However, in scenes with very few objects, the time limit may be unnecessarily restrictive, and retaining inactive tracks longer could improve the chances of successful re-identification without overloading the system. Conversely, in scenes with many objects, inactive tracks may need to be discarded more quickly to prevent the gallery from growing too large, which would otherwise reduce the accuracy of the decision model.

There is thus a need for improvements in this context.

### Summary

In view of the above, solving or at least reducing one or several of the drawbacks discussed above would be beneficial, as set forth in the attached independent patent claims.

According to a first aspect of the present disclosure, there is provided a method for controlling a list of inactive tracks used for re-identification in an object tracking system comprising an object detector, the object tracking systems tracking objects in a scene; the object tracking system comprising a re-identification model used when attempting to associate object detection data received from the object detector with an inactive track from the list, the re-identification model being a metric learning model trained on object detection data, the method comprising: obtaining, using a decision threshold of the re-identification model, a false positive rate of the re-identification model; obtaining an acceptable false positive rate of the object tracking system; determining, using the acceptable false positive rate of the object tracking system and the false positive rate of the re-identification model, one or more terminal conditions for deleting an inactive track from the list; determining that a first inactive track fulfils a terminal condition from the one or more terminal conditions; and deleting the inactive track from the list.

Advantageously, using the techniques described herein, the static time limit for how long an inactive track can stay in the list of inactive tracks used for re-identification is replaced by one or more terminal conditions for when to discard inactive tracks. The one or more terminal conditions are based on the acceptable false positive rate of the object tracking system and the false positive rate of the re-identification model (ReID model). This in turn makes the time that an inactive track stays in the list dependent on how crowdy the scene is and/or the complexity of the tracked scene. Using the techniques of the present disclosure, a minimum matching precision (i.e., the acceptable false positive rate of the object tracking system) between object detections and inactive tracks is maintained. As such, the one or more terminal conditions are determined in view of a performance value of the ReID model (i.e. false positive rate of the model) to maintain a desired minimum probability of correct feature similarity result output from the ReID model. This in turn will lead to that the number of inactive tracks in the list is kept at a manageable level to achieve the acceptable false positive rate.

In the context of this disclosure, the "decision threshold" refers to a point, such as a distance metric between the feature vector of object detection data and the feature vector of an inactive track, where the ReID model determines whether the detection is classified as a true or false match with the inactive track. This threshold is set based on the intersection of the probability distributions for true and false matches. The model's false positive rate is influenced by this threshold, and adjusting it controls the trade-off between true matches and false positives.

In the context of this disclosure, the "metric learning model" refers to a machine learning model designed to learn a similarity function between object data, often using distance metrics (e.g., between feature vectors). Examples of such models include convolutional neural networks (CNNs), transformer based models and Siamese networks. In other examples, non-neural network based models can be used, such as Support Vector Machines (SVM). These models can be trained using pairs, triplets, or larger sets of object data. In pair-based training, the model learns to minimize the distance between similar objects and maximize the distance between dissimilar ones. In triplet-based training, the model uses an anchor, a positive sample (same object), and a negative sample (different object). Larger sets of object data may also be used to further enhance the model's ability to accurately distinguish objects.

In some examples, each inactive track in the list is associated with a counter which indicates a number of unsuccessful association attempts for the inactive track, wherein the method further comprises: determining, using the acceptable false positive rate of the object tracking system and the false positive rate of the re-identification model, a threshold number of association attempts of each the inactive track in the list; obtaining first object detection data from the object detector; and evaluating whether the first object detection data is associated with the first inactive track from the list, wherein upon the object detection data is not associated with the first inactive track from the list, increasing the counter associated with the first inactive track; wherein a first terminal condition of the one or more terminal conditions comprises the counter exceeding the threshold number of attempts.

Advantageously, by systematically removing inactive tracks after repeated unsuccessful association attempts, overloading the list of inactive tracks used for re-identification with irrelevant data may be avoided, reducing memory and computational burden. Using a counter indicating how many times in a row that the inactive track has been evaluated against an object detection without being matched may be a low complexity way of achieving a better tuning of the trade-off between track retention and accurate re-identification performance. The threshold number of association attempts is set to maintain the minimum matching precision between object detections and inactive tracks.

In some examples, the method further comprises: obtaining a plurality of object detection data from the object detector, the plurality of object detection data being associated with a same image frame of a video stream depicting the scene; for each object detection data of the plurality of object detection data, evaluating whether the object detection data is associated with the first inactive track from the list, wherein upon the object detection data is not associated with the first inactive track from the list, increasing the counter associated with the first inactive track; wherein the step of determining that a first inactive track fulfils the first terminal condition from the one or more terminal conditions is performed after all object detection data of the plurality of object detection data has been evaluated.

Advantageously, waiting to discard inactive tracks until all object detections in a frame have been evaluated may reduce the risk of prematurely deleting a track. By considering all detections in the frame, the present example may ensure that no potential match is overlooked, minimizing the chance of discarding an inactive track that could be re-identified later in the same frame. This approach may increase re-identification opportunities by attempting to associate each object detection in a frame with an inactive track before possibly making a decision to discard the inactive track.

In some examples, upon the first object detection data is associated with the first inactive track from the list, deleting the first inactive track from the list. If the inactive track is associated with an object detection, it becomes active, and the counter is no longer relevant.

In some examples, the threshold number is determined by solving the equation *TPR_{model} ^{N}* = *TPR_{system}* wherein *TPR_{model}* indicates the true positive rate of the re-identification model, wherein the *TPR_{system}* indicates 1 minus the acceptable false positive rate of the object tracking system and, wherein the threshold number is determined using *N.* Consequently, the variable *N* adjusts the threshold to align the performance of the ReID model with system requirements, facilitating that the ReID model achieves a desired minimum probability for correct feature similarity outputs. For example, the threshold number may be determined by applying a ceiling function or a floor function to *N.*

In some examples, each inactive track in the list is associated with a location data indicating a location in a scene where the inactive track was determined to be inactive by the object tracking system, the method further comprising: determining first location data from the obtained object detection data; selecting a subset of inactive tracks from the list based on the location data from the first object detection data and the location data associated with each of the inactive tracks in the list; and for each inactive track in the subset of inactive tracks, evaluating whether the object detection data is associated with the inactive track, wherein upon the object detection data is not associated with the inactive track, increasing the counter associated with the inactive track.

Advantageously, in the present example the counter is updated only for relevant inactive tracks (i.e., within threshold distance from the location associated with the inactive track). Consequently, unnecessary track deletions may be avoided. By facilitating that only relevant tracks near the object's location are evaluated, the system avoids incrementing counters for tracks that are obviously unrelated to the detected object. This may prevent the premature deletion of valid inactive tracks due to irrelevant object data, maintaining a more accurate and reliable tracking system over time.

In some examples, the method further comprises obtaining a maximum number of inactive tracks in the list; sorting the list of inactive tracks according to their associated counters; and truncating the list to comprise the maximum number of inactive tracks. Consequently, computational restrictions may be met. For instance, if processing power decreases, truncation temporarily reduces the load on the ReID system without altering the threshold number of re-identification attempts for each inactive track. This may help maintaining performance efficiency under fluctuating computational resources, balancing system demands and operational capacity.

In some examples, each inactive track in the list is associated with a timer indicating a time span since the inactive track was added to the list, wherein the method further comprises: determining a current number of objects, *p,* in the scene; estimating how many attempts, *r*, to associate object detection data received from the object detector with an inactive track from the list is performed by the object tracking system per inactive track and time unit; and determining a threshold time span in time units using *p, r,* the acceptable false positive rate of the object tracking system and the false positive rate of the re-identification model; wherein a second terminal condition of the one or more terminal conditions comprises a time span of an inactive track exceeding the threshold time span.

Different from the previous examples involving the count, the second terminal condition does directly depend on the number of unsuccessful association attempts. Instead, in this example, the number of re-identification attempts is estimated per inactive track and time unit (e.g., second), for example using historical data and possibly the number of objects in the scene. The number of re-identification attempts may thus depend on factors such as the number of objects in the scene, but also on the quality of the tracking system and the complexity of the scene. For example, in environments with many obstacles, such as areas where objects can be easily occluded or where paths frequently cross, tracks may often be lost, resulting in a higher number of re-identification attempts per inactive track and time unit. In contrast, simpler scenes with fewer obstacles and better visibility may result in a lower number of re-identifications attempts per inactive track and time unit.

This estimation is then used to determine a threshold time span, ensuring the system maintains accuracy while keeping the number of inactive tracks under control in both crowded and less dense environments, irrespectively of the complexity of the scene.

In some examples, the threshold time span, *t,* in time units is determined by solving the equation *TPR_{model}^{r*p*t}* = *TPR_{system}.* In other examples, the threshold time span, *t,* in time units is determined by solving the equation *FPR_{model}*^{*R*(*p*)**t*} = *FPR_{system},* wherein *R* corresponds to a total number of association attempts that is performed by the object tracking system per time unit and is a function of *p.*

In some examples, the method comprises estimating a change, *p'*, of the number of objects in the scene per time unit using *p* and historical data indicating counts of objects in the scene at a plurality of points in time; wherein the threshold time span, *t,* in time units is determined by solving the equation *TPR_{model}*^{*R(p'*)}*^{*t} = TPR_{system}* wherein *R* corresponds to a total number of association attempts that is performed by the object tracking system per time unit is a function of*p*'.

In this example, the number of new objects entering the scene per time unit, the "track flow" into (and out of) the scene, is estimated. Track flow, *p'*, can be estimated as a running average that is updated continuously. Advantageously, the system can respond more effectively to variations in scene complexity resulting from the dynamic movement of objects.

In some examples, the method comprises: obtaining a maximum number of inactive tracks in the list: sorting the list of inactive tracks according to the time span indicated by their associated timers; and truncating the list to comprise the maximum number of inactive tracks.

Consequently, computational restrictions may be met. For instance, if processing power decreases, truncation temporarily reduces the load on the ReID system without altering the threshold time span. This may help maintaining performance efficiency under fluctuating computational resources, balancing system demands and operational capacity.

In some examples, the method further comprises obtaining, from a user of the object detection system, an updated acceptable false positive rate of the object tracking system; and updating, using the updated acceptable false positive rate of the object tracking system, at least one of the threshold number of attempts and the threshold time span.

Advantageously, flexibility in adapting to user-defined system requirements may be achieved. By allowing a user to provide an updated acceptable false positive rate for the object tracking system, the method may facilitate that the system remains customizable based on specific operational needs. The system may dynamically adjust the threshold number of attempts and/or the threshold time span based on the updated acceptable false positive rate.

According to a second aspect of the disclosure, the above object is achieved by a non-transitory computer-readable storage medium having stored thereon instructions for implementing the method according to the first aspect when executed on a device having processing capabilities.

According to a third aspect of the disclosure, the above object is achieved by an object tracking system comprising an object detector, the object tracking systems tracking objects in a scene; the object tracking system comprising a re-identification model used when attempting to associate object detection data received from the object detector with an inactive track from the list, the re-identification model being a metric learning model trained on object detection data, the object tracking system configured to control a list of inactive tracks used for re-identification by: obtaining, using a decision threshold of the re-identification model, a false positive rate of the re-identification model; obtaining an acceptable false positive rate of the object tracking system; determining, using the acceptable false positive rate of the object tracking system and the false positive rate of the re-identification model, one or more terminal conditions for deleting an inactive track from the list; determining that a first inactive track fulfils a terminal condition from the one or more terminal conditions; and deleting the inactive track from the list.

In some examples, the object tracking system of the third aspect is connected to a camera capturing a video stream depicting the scene.

The second and third aspect may generally have the same features and advantages as the first aspect.

### Brief Description of the Drawings

The above, as well as additional objects, features, and advantages of the present disclosure, will be better understood through the following illustrative and non-limiting detailed description of embodiments of the present disclosure, with reference to the appended drawings, where the same reference numerals will be used for similar elements, wherein:
Figure 1 shows an object tracking system according to examples;
Figure 2 shows distributions of a match and non-match in a metric learning model used for re-identification in object tracking, according to examples;
Figure 3 shows a tracked scene, and a list of inactive tracks used for re-identification, wherein each inactive track is associated with a counter which indicates a number of unsuccessful association attempts for the inactive track, according to examples;
Figure 4 shows the tracked scene and the list of inactive tracks used for re-identification of figure 3, wherein each inactive track is further associated with location data, according to examples;
Figure 5 shows a tracked scene and a list of inactive tracks used for re-identification, wherein each inactive track is associated with a timer indicating a time span since the inactive track was added to the list, according to examples; and
Figures 6-8 each shows a flow chart of method for controlling a list of inactive tracks used for re-identification in an object tracking system according to examples.

### Detailed Description

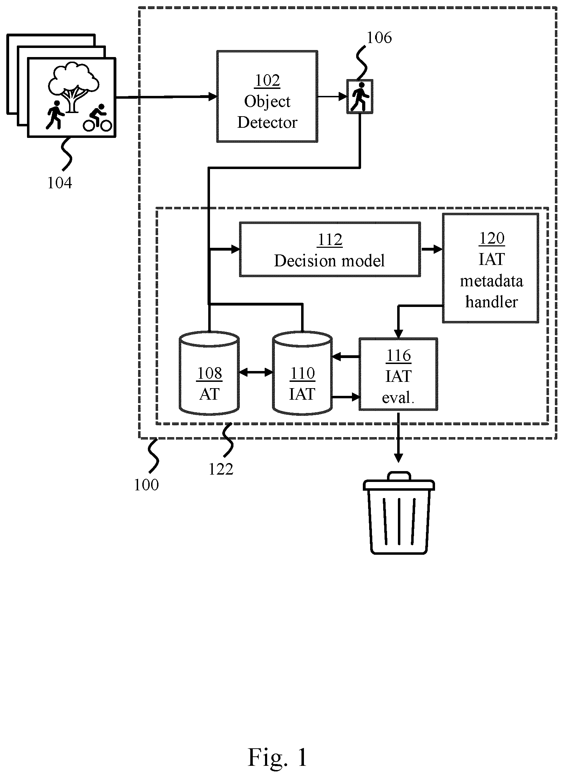

Object tracking systems are essential for applications such as surveillance and autonomous driving, enabling continuous monitoring of objects in a scene through video feeds and algorithms that form "object tracks." These tracks, built from a sequence of associated object detections, can become inactive when an object is temporarily lost due to occlusions or moving out of view. To prevent redundant tracks, inactive tracks are stored in an "inactive track gallery" for potential re-identification if the object reappears. The re-identification (ReID) process uses feature vectors and a decision model such as a convolutional neural network (CNN) to match new detections with inactive tracks. The techniques described herein optimizes track management by replacing a static time limit for inactive tracks (as described in prior art) with a dynamic limit based on a performance value of the decision model to maintain a desired minimum probability of correct feature similarity result output from the decision model. Using these techniques, the retention time of inactive tracks can be adapted according to scene density, maintaining high matching precision. For sparse scenes having a relatively low density of objects, tracks can remain longer in the inactive track gallery, enhancing re-identification without overloading the system, whereas in crowded scenes having a relatively high density of objects, tracks are discarded more quickly to maintain accuracy. The methods described herein employ various termination conditions, such as counters tracking unsuccessful matches and time limits adjusted by scene density and track flow. Such dynamic control may help to maintain a desired performance level, facilitating efficient and precise object tracking across varying scenarios. The following sections provide detailed examples and illustrations in conjunction with Figures 1-8.

Figure 1 shows by way of example an overview of components and functionality of an object tracking system 100. The object tracking system 100 receives a video stream 104, i.e., a sequence of video frames, as an input. For example, the object tracking system may be connected to a camera capturing a video stream 104 depicting a scene. In some examples, the object tracking system 100 is comprised in the camera.

The object tracking system 100 comprises an object detector 102 which is configured to detect objects in each image frame of the video stream 104. The object detector 102 outputs object detection data 106.

The object detection data 106 may include information such as the spatial coordinates, size, and class label of each detected object within an image frame. The object detection data 106 may further comprise a confidence score indicating the likelihood that the detection corresponds to a real object or a classification. The detection data may also include appearance features (a feature vector) extracted from the detected regions of the image frame (e.g., using a CNN), enabling the object tracker 122 to distinguish between similar objects and thus facilitating object tracking and ReID. This data may be formatted as bounding boxes or regions of interest (ROIs) around each object, which serve as inputs for an object tracker 122 to associate detections across consecutive frames and generate continuous object tracks. The object tracking system may implement "tracking-by-detection" which is an approach in object tracking where the process relies on detecting objects in each frame of a video sequence and then linking the detected instances across frames to form tracks.

The object detection data 106 is provided to the object tracker 122, which includes a decision model 112. The decision model 112 assesses the feature similarity between new detections (the object of the object detection data 106) and inactive tracks and/or active tracks by comparing the feature vectors associated with the new detections and the track. A similarity score may then be computed (e.g., Euclidean distance, cosine similarity, or using a CNN trained for that purpose), and used to make the decision whether the new detection should be matched with the active tracks (AT), an inactive track (IAT) or define a new object track. In some embodiments, if the new detection does not match with any AT, a new track may be initiated. Over time, as this new track accumulates a series of detections, the feature vector representing the new track may be compared to the feature vector of an IAT to evaluate whether the new track should be associated with an IAT.

In some configurations, the object tracker 122 may use separate decision models 112 for assessing AT and IAT, respectively. Each AT or IAT may consist of multiple feature vectors, with each feature vector representing a distinct object detection that has been associated with the track over time. The decision model may comprise a Kalman filter. The Kalman filter may use the spatial coordinates and motion information of the object detection data, along with a predicted trajectory of the tracked object.. For re-ID. i.e., matching with IAT 110, the state of the Kalman filter may be used to estimate where it is likely that an object has travelled since becoming inactive, and only attempt to revive IAT within that area by calculating the similarity score as described above. Going further into details, there are many ways of implementing re-ID. For example, on possible implementation include associating potential matches, e.g., based on the Kalman filter, with a "matching cost" and then run an association algorithm that matches detections with tracks based on that cost. The matching cost can be based on feature distance, motion information, etc. The association algorithm may for example be greedy, i.e., start by matching the lowest costs. The association algorithm can be set up as a bipartite graph problem and be solved with e.g., the Hungarian algorithm.

The object tracker 122 maintains and updates information about active and inactive tracks in memory. Active tracks (AT) and inactive tracks (IAT) may in embodiments be stored in separate data structures, referred to as the list 108 of active tracks and the list 110 of inactive tracks, respectively. The list 108 of active tracks contains information on objects that are currently being tracked, including their feature vectors, spatial coordinates, and motion states. These tracks are continuously updated with new object detection data as long as the objects remain visible in the acquired images of the scene.

When an object temporarily disappears from the camera view, due to occlusion, moving out of the field of view or moving out of an object detection zone, the corresponding AT is moved to the list 110 of inactive tracks. The move can be triggered by that the AT has not been matched to any detected object during a predetermined number of frames. The list 110 of inactive tracks stores feature vectors and historical data of tracks that are not currently active but are retained for potential re-identification if the object reappears. Similarly, when object detection data 106 is associated with an inactive track from the list 110, the IAT is moved to the list of active tracks 108, thus deleting the IAT from the list 110.

The object tracker 122 further includes an IAT metadata handler 120. Each inactive track (IAT) is associated with metadata used to assess whether the IAT meets a termination condition, such as exceeding a specified number of consecutive unsuccessful match attempts or remaining in the list of inactive tracks 110 beyond a predefined time limit. The IAT metadata handler 120 is responsible for handling and updating this data, for example by incrementing the counter that records the number of unsuccessful association attempts for each IAT when a new detection does not match the track. Additionally, or alternatively, the IAT metadata handler 120 handles a timer per IAT that tracks the time elapsed since the IAT was added to the list of inactive tracks 110.

The IAT metadata handler 120 may, e.g., in the case of a counter being implemented as discussed above, operate based on the output from the decision model 112. For example, if the decision model 112 evaluates a non-match between the detection and any inactive tracks, the IAT updater 120 can directly update the corresponding IAT metadata. For instance, the counter tracking the number of consecutive unsuccessful association attempts for that IAT may be updated. As described above, if an IAT is not considered as relevant due to its associated location data, e.g., if the Kalman filter predicts that the spatial and motion characteristics of the object detection data 106 do not align with the inactive track, the IAT metadata handler 120 may not increment the counter.

The object tracker 122 further includes an IAT evaluator 116. The IAT evaluator 116 operates on the metadata provided by the IAT metadata handler 120 and the corresponding inactive tracks stored in the list of IATs 110. For each IAT in the list 110, the IAT evaluator 116 uses the associated metadata to determine whether the inactive track meets any of one or more predefined terminal conditions. If an inactive track satisfies a terminal condition, it is removed from the list 110.

The division of functionality for managing the list of inactive tracks used for re-identification in an object tracking system, as illustrated in Figure 1, is provided solely for descriptive purposes. The described components, such as the IAT metadata handler 120 and the IAT evaluator 116, are shown as separate entities to clearly convey the roles and processes involved in handling inactive tracks. However, it should be understood that the techniques discussed herein can be implemented in various ways, and the specific organization of components may vary depending on the system architecture and design preferences. For example, certain functionalities may be combined into a single module, distributed across multiple systems, or implemented using alternative methods that achieve the same objectives. The described structure of figure 1 is therefore not intended to be limiting, and any configuration that controls the list of inactive tracks and supports the re-identification process falls within the scope of this disclosure.

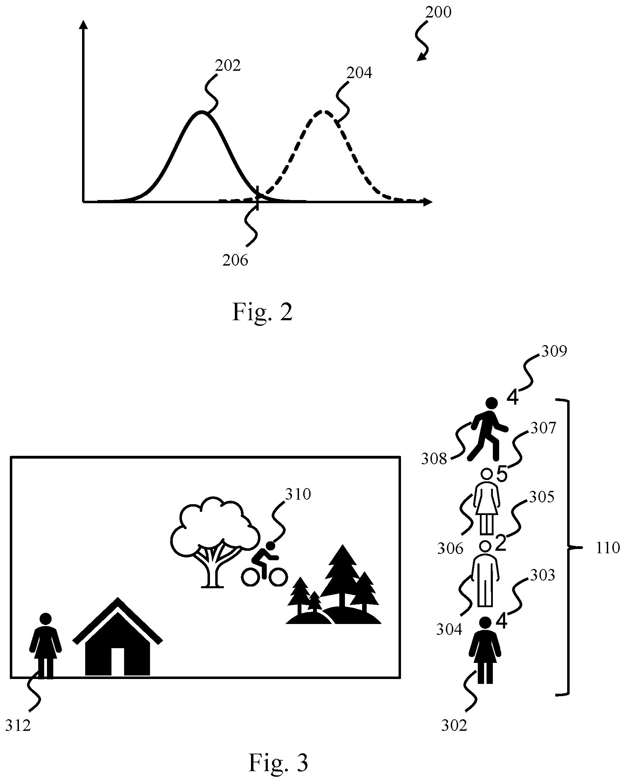

Figure 2 shows by way of example the decision-making process of a re-identification model in an object tracking system. The graph shows distributions of feature vector distances for two different types of object comparisons. The x-axis of the graph 200 represents feature vector distances and the y-axis represents the probability or measured frequency.

The two curves, labelled as 202 and 204, correspond to comparisons between true matches and false matches, respectively. Curve 202 (solid line) represents the distribution of distances for true re-identification cases, where the compared feature vectors were computed from different instances of the same object. In contrast, curve 204 (dashed line) represents the distribution of distances for false matches, where the compared feature vectors were computed from instances of different objects..

The decision threshold 206 is a value the re-identification model uses to determine whether a new object should be identified as the lost track. Distances to the left of this threshold are classified as true re-identifications, while distances to the right are considered false re-identifications. The false positive rate of the re-identification model can be directly determined using this decision threshold. It is calculated as the proportion of cases under curve 204 (false matches) that fall to the left of the threshold, indicating instances where the model incorrectly identifies a new object as the lost track.

The false positive rate (FPR) can be obtained by the object tracking system from either an internal or an external source when derived from offline data, such as historical information or external guidelines. Once deployed, the FPR can be computed dynamically in an online setting. In scenarios where the algorithm is running and there are multiple active tracks in the scene that are well separated in space (i.e., far from each other in the camera view), it is known with certainty that these tracks correspond to different objects or individuals. By analysing the ReID distances between different tracks (representing the 'false positive' distribution) and comparing these against the intra-track ReID distances (self-self distances, representing the 'true positive' distribution), the system can estimate the relevant distributions in the scene over time. This may allow for sufficient statistical confidence in these distributions. Using these online observations, the object tracking system can dynamically set the decision threshold 206 to effectively separate the true positive and false positive distributions, even if this threshold differs from the one set during offline training. This new threshold can then have a different false-positive-rate for the ReID model than the original threshold, which will then lead to a different terminal condition used for deleting an inactive track from the list of inactive tracks, as will described further below.

Figure 3 shows a tracked scene (an image frame of such a scene) with a plurality of objects 310, 312. Moreover, figure 3 shows a representation of a list 110 of inactive tracks 302, 304, 306, 308. In some embodiments, each inactive track 302, 304, 306, 308 in the list 110 is associated with a counter 303, 305, 307, 309 which indicates a number of unsuccessful association attempts for the inactive track 302, 304, 306, 308. For example, the inactive track 308 has been evaluated against an object detection 4 times in a row without being matched. When a match is confirmed, the inactive track is moved from the list 110 to the list 108 (see figure 1) of active tracks, as explained above.

In some examples, a terminal condition for an inactive track 302, 304, 306, 308 is that its associated counter 303, 305, 307, 309 reaches a predetermined value.

The predetermined value, i.e., a threshold number of association attempts may be determined using the false positive rate of the re-identification model, which is determined using the decision threshold as explained above in conjunction with figure 2. The false positive rate of the re-identification model may for example be 0.025 (2.5%).

The threshold number of association attempts may further be determined using an acceptable false positive rate of the object tracking system. The acceptable false positive rate of the object tracking system may be obtained from a user of the object detection system. The acceptable false positive rate may be updated during use of the object tracking system an updated acceptable false positive rate of the object tracking system, and thus, the threshold number of attempts may be updated.

The acceptable false positive rate may be implementation-specific, depending on the use case requirements. For example, in high-security scenarios, such as surveillance in sensitive areas like airports or military facilities, the acceptable false positive rate may be set very low to ensure that only a minimal number of incorrect re-identifications occur. Conversely, in less critical applications, such as monitoring the flow of people in a shopping mall or tracking wildlife, a higher false positive rate may be acceptable, as occasional misidentifications may not significantly impact the overall system performance.

For example, the acceptable false positive rate may be set to 0.1 (10%).

In some examples, the threshold number of association attempts is determined by solving the equation: ${{TPR}_{model}}^{N} = {TPR}_{system}$ wherein *TPR_{model}* indicates the true positive rate of the re-identification model, wherein the *TPR_{system}* indicates 1 minus the acceptable false positive rate of the object tracking system and, wherein the threshold number is determined using *N*.

Given that *TPR_{model}* = 0.975 (2.5% false positive rate, FPR) and that *TPR_{system}* = 0.9 (10% acceptable errors), N can be solved by taking the natural logarithm of both sides such that $N = \frac{ln \left(0.9\right)}{ln \left(0.975\right)} = 4.16$. As can be understood from the above, *TPR_{model}* and *TPR_{system}* may take any suitable number and depends on the system requirements and the model accuracy.

The threshold number may be determined by applying a ceiling function to *N,* which gives *N* = 5. The threshold number may be determined by applying a floor function to *N,* which gives *N* = *4.*

In the example of figure 3, the threshold number association attempts is set to 5.

In an example scenario as described in figure 3, for object detection data (received from the object detector 102 in figure 1) relating to the object 312 in figure 3, the result will be that the counter 309 associated with the inactive track 308 will be incremented by one, from four to five, since the object detection data will not be associated with the inactive track 308 (different objects). Similarly, the counter 307 associated with the inactive track 306 will be incremented by one, from five to six and the counter 305 associated with the inactive track 304 will be incremented by one, from two to three. The inactive track 302 will be deleted from the list 110 since the object detection data pertaining to object 312 will be associated with the inactive track 302 (same object, the re-ID matching has succeeded) and the inactive track 302 will become active.

Since the counter 307 associated with the inactive track 306 exceeds the threshold number of association attempts (6>5), the inactive track 306 may be deleted from the list 110.

In some embodiments, the deletion of IAT is not performed until all object detection data being associated with a same image frame of a video stream depicting the scene is evaluated. For example, in the example of figure 3, a plurality of object detection data from the object detector is received, e.g., from the object 312 and the object 310. As such, in these examples, for each object detection data of the plurality of object detection data, the object detection system is evaluating whether the object detection data is associated with the inactive track(s) from the list 110. Upon the object detection data is not being associated with a specific inactive track from the list 110, the counter associated with the specific inactive track is incremented by one as described above. In this example, the step of determining that an inactive track fulfils the terminal condition (the counter exceeding the threshold number of association attempts) is performed after all object detection data of the plurality of object detection data has been evaluated. In other example, the inactive track fulfilling the terminal condition is deleted directly when the terminal condition is fulfilled. E.g., the inactive track 306 may in such an example be deleted as soon as an object detection data is evaluated as not being associated with the inactive track 306.

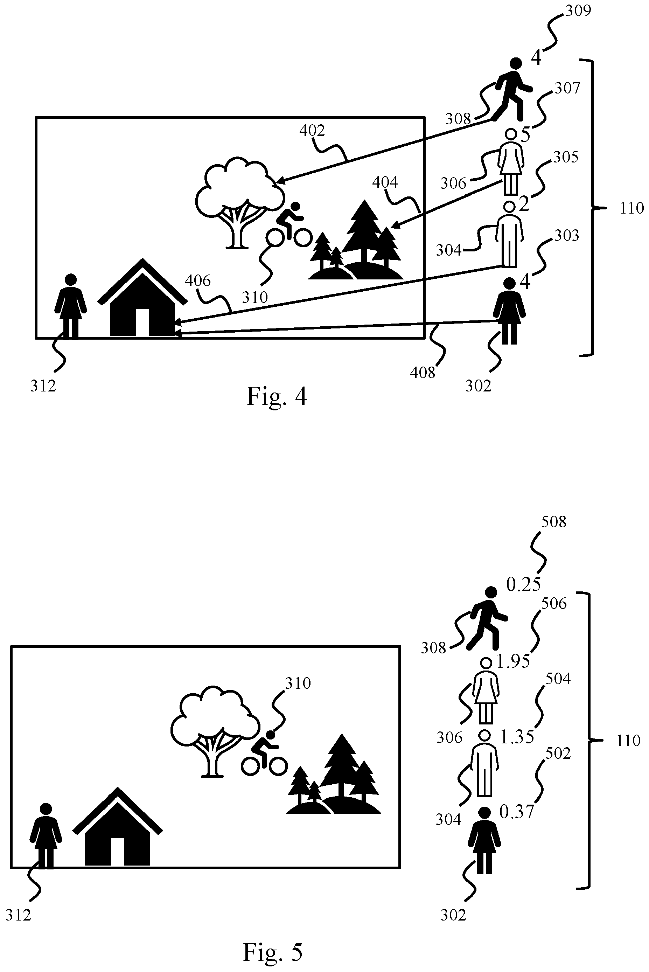

In some examples, not all object detection data is evaluated against all inactive tracks 302, 304, 306, 308 in the list 110. Such an example is illustrated in Figure 4. In this example, each inactive track 302, 304, 306, 308 in the list 110 is associated with location data, indicating the position in the scene where the object tracking system determined the track to be inactive. The location data is represented by arrows 402, 404, 406, 408 in Figure 4. In the example of Figure 4, inactive tracks 302 and 304 were both lost near the building in the scene, while inactive track 306 was lost near the grove of trees, and inactive track 308 was lost near the large tree in the scene.

As described above, the object detection data output from the object detector may include location data, such as spatial coordinates, indicating the position in the scene or the image frame from which the object was detected.

For each new object detection, a subset of inactive tracks from the list 110 may be selected based on the proximity of their location data to the location data of the new detection. This selection process may be guided by a threshold distance, which determines whether an inactive track should be evaluated against the new object detection. The threshold distance may be a predefined maximum allowable distance between the location data of the new object detection and the location data of the lost track 302, 304, 306, 308. If the distance between the two locations is within this threshold, the inactive track is considered a potential match and is further evaluated using the re-identification model. Conversely, if the distance exceeds this threshold, the inactive track is not evaluated against the current detection, as it is considered unlikely to correspond to the same object. Additionally, velocity data or similar information from the lost track may be utilized to estimate where the lost track object is expected to be at the current point in time. The threshold may increase over time. By considering the object's previous velocity, the system can predict its possible location and adjust the selection of inactive tracks accordingly. This may help refining the set of potential matches, ensuring that even if the object has moved since it was last tracked, the correct inactive track can still be identified for evaluation.

By using such selection process, the object detection system can efficiently narrow down the number of inactive tracks to be evaluated, reducing computational load and improving tracking performance. As a result, only the counters 303, 305, 307, 309 associated with these selected tracks are incremented based on the evaluation outcome. This approach may prevent unnecessary increments of counters for unrelated inactive tracks, ensuring that only tracks with relevant and unsuccessful association attempts are removed from the list. Consequently, inactive tracks will not be deleted based on irrelevant data, allowing them to be retained in the system. This may improve the chances of successful re-identification in future evaluations, as the object detection system may keep more potentially valid inactive tracks available for matching. In the example of figure 4, the object detection data corresponding to object 312 detected near the building may thus only be assessed against the inactive track 304 and 302 from the list 110 which in turn means that the counter of inactive track 306 and 308 of the list will not be increased based on this object detection data.

In some examples, a terminal condition pertaining to a time limit is defined. Such a time limit may be defined in view of crowded the scene is, and the complexity of the scene, to maintain the acceptable false positive rate of the object tracking system. Figure 5 describes such an example. In this example, each inactive track 302, 304, 306, 308 in the list 110 is associated with a timer 502, 504, 506, 508 indicating a time span since the respective inactive track 302, 304, 306, 308 was added to the list 110. For example, in this example, the inactive track 304 was added to the list 1.35 seconds ago.

In these examples, the terminal condition comprises a time span of an inactive track exceeding a threshold time span. The threshold time span may be determined using a current number of objects, *p,* in the scene, and by further estimating how many attempts, *r*, to associate object detection data received from the object detector with an inactive track from the list is performed by the object tracking system per inactive track and time unit. The threshold time span may then be determined using *p*, *r*, the acceptable false positive rate of the object tracking system and the false positive rate of the re-identification model.

In one example, the threshold time span, *t,* in time units is determined by solving the equation *TPR_{model}^{r*p*t}* = *TPR_{system}.* Consequently, t is determined by: $t = \frac{log \left({TPR}_{system}\right)}{r ∗ p ∗ log \left({TPR}_{model}\right)}$

If *TPR_{system}* = 0.9 (*FPR_{system}* = 0.1), *TPR_{model}*= 0.99 (*FPR_{model}* = 0.01), r = 2 and p = 3, this will give t = 1.75.

In another example *t,* in time units is determined by solving the equation *TPR_{model}*^{*R*(*p*)**t*} = *FPR_{system},* wherein *R* corresponds to a total number of association attempts is performed by the object tracking system per time unit and is a function of *p.* Consequently, *t* is determined by: $t = \frac{log \left({TPR}_{system}\right)}{R \left(p\right) ∗ log \left({TPR}_{model}\right)}$

For example, if R(p) = 3.5, this will give t = 3.0 using the values for *TPR_{system}* and *TPR_{model}* exemplified above.

The estimation of how many attempts, *r*, to associate object detection data from the object detector with an inactive track from the list is performed by the object tracking system per inactive track and time unit. This process can initially use a default value for *r*, but it should then be adapted to the specific scene. The algorithm achieves this by collecting statistics over time on the number of revive attempts made in the scene and the number of active tracks present during each revive attempt. By correlating the frequency of attempts with the number of objects, *p,* in the scene, the system can dynamically adjust *r* as a function of *p* based on the observed data, improving the object tracking system's accuracy and responsiveness to changing conditions in the scene.

In some examples not shown in figure 5 the method comprises estimating a change, *p',* of the number of objects in the scene per time unit using *p* and historical data indicating counts of objects in the scene at a plurality of points in time; wherein the threshold time span, *t,* in time units is determined by solving the equation: ${{TPR}_{model}}^{R \left(p′\right) ∗ t} = {TPR}_{system} ,$ wherein *R* corresponds to a total number of association attempts that is performed by the object tracking system per time unit and is a function of *p*'. This may further improve the adaptivity to changes of the number of tracked objects in the scene.

As described in conjunction with figures 3-4 above, when the time span 502, 504, 506, 508 of an inactive track 302, 304, 306, 308 in figure 5 exceeds the determined threshold time span, the corresponding track will be deleted from the list 110. For example, if the threshold time span, *t,* is set to 1.75 according to the above, this means that the inactive track 306 will be deleted.

For any of the examples disclosed in conjunction with figures 3-5, a maximum number of inactive tracks in the list 110 may be implemented, facilitating that the system tracking system operates within the specified resource constraints and focuses on the most promising re-identification candidates.

For the example of figure 5, the implementation may comprise obtaining a maximum number of inactive tracks in the list, sorting the list of inactive tracks according to the time span indicated by their associated timers and then truncating the list to comprise the maximum number of inactive tracks.

For the examples of figures 3-4, a maximum number of inactive tracks in the list may similarly be obtained. The implementation may further comprise sorting the list of inactive tracks based on their associated counters, which indicate the number of unsuccessful re-identification attempts. Tracks with higher counters, signifying multiple failed attempts, may be deprioritized or removed, as they are less likely to correspond to newly detected objects. After sorting, the list is truncated to include only the maximum number of inactive tracks.

The maximum number of inactive tracks can be configured based on the current processing capabilities of the object tracking system and continuously updated (e.g., once per defined period of time). Systems with limited resources may need to enforce a lower maximum to maintain optimal performance and prevent overloading.

In any of the examples described in conjunction with figures 3-5, the matching criteria for associating an object detection with an inactive track may become stricter over time and/or as the value of the counter increases. This means that the minimum similarity score required to match an object detection with an older inactive track must be higher compared to the criteria for matching a new object detection with a more recently inactive track. As a result, the system gradually increases the difficulty for an inactive track to be revived, effectively implementing a soft termination process. This approach allows the system to naturally phase out inactive tracks that are unlikely to correspond to new detections, optimizing the re-identification process over time.

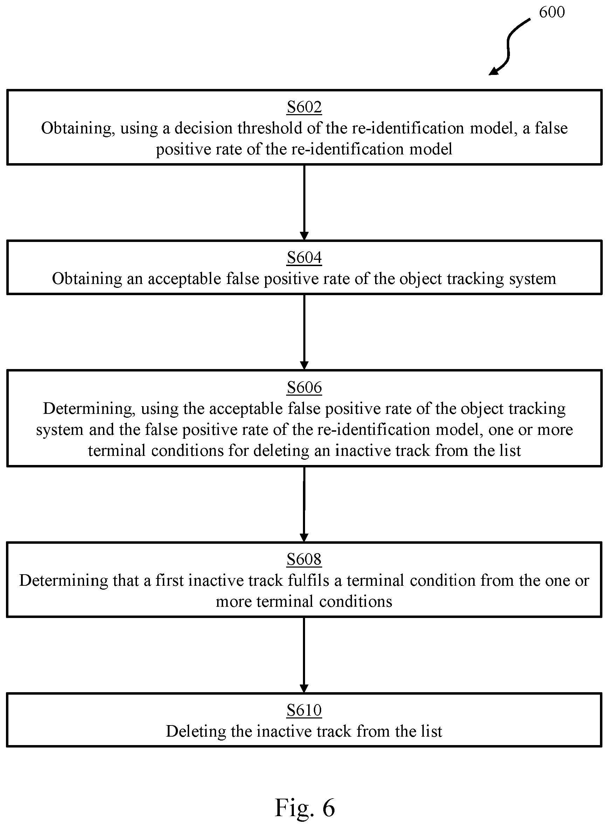

Figure 6 shows a flow chart of a method 600 for controlling a list of inactive tracks used for re-identification in an object tracking system. The object tracking system comprises an object detector, and object tracking systems is tracking objects in a scene. The object tracking system comprises a re-identification model used when attempting to associate object detection data received from the object detector with an inactive track from the list, the re-identification model being a metric learning model trained on object detection data.

The method 600 comprises obtaining S602, using a decision threshold of the re-identification model, a false positive rate of the re-identification model. The method further comprises obtaining S604 an acceptable false positive rate of the object tracking system.

The method 600 further comprises determining S606, using the acceptable false positive rate of the object tracking system and the false positive rate of the re-identification model, one or more terminal conditions for deleting an inactive track from the list.

The method further comprises determining S608 that a first inactive track fulfils a terminal condition from the one or more terminal conditions.

The method further comprises deleting S610 the inactive track from the list.

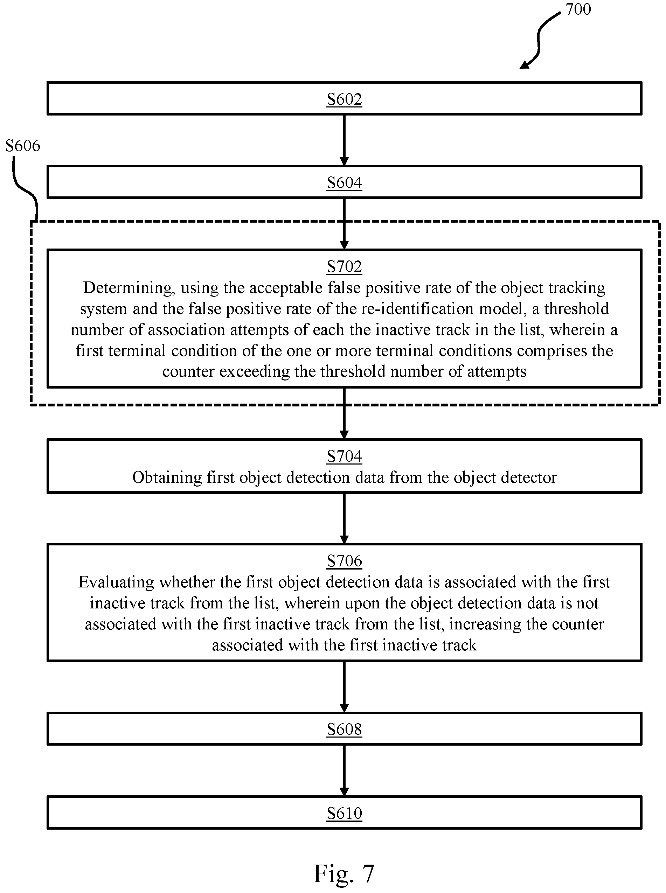

Figure 7 shows by way of example a flow chart of a method 700 being an extension of the method 600 from figure 6 and further described above in conjunction with figures 3-4.

The method 700 comprises S602 and S604 from the method 600.

In method 700, the step S606 from the method 600 is implemented by determining S702, using the acceptable false positive rate of the object tracking system and the false positive rate of the re-identification model, a threshold number of association attempts of each the inactive track in the list; wherein a first terminal condition of the one or more terminal conditions comprises the counter exceeding the threshold number of association attempts.

The method 700 further comprises obtaining S704 first object detection data from the object detector.

The method 700 further comprises evaluating S706 whether the first object detection data is associated with the first inactive track from the list, wherein upon the object detection data is not associated with the first inactive track from the list, increasing the counter associated with the first inactive track.

The method 700 further comprises S608 and S610 from the method 600.

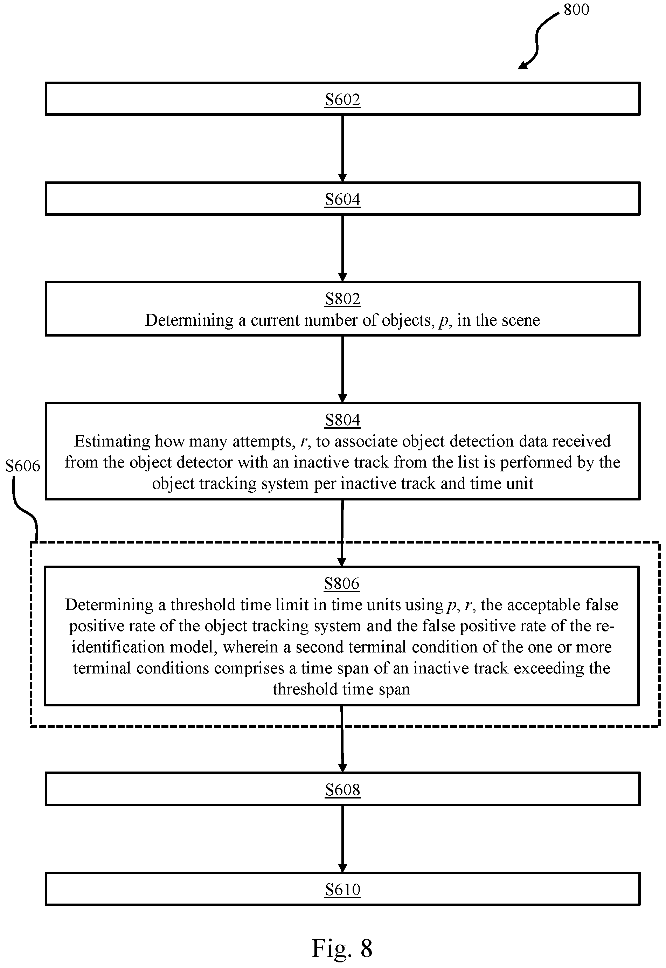

Figure 8 shows by way of example a flow chart of a method 800 being an extension of the method 600 from figure 6 and further described above in conjunction with figure 5.

The method 800 comprises S602 and S604 from the method 600.

The method 800 further comprises determining S802 a current number of objects, *p,* in the scene.

The method 800 further comprises estimating S804 how many attempts, *r*, to associate object detection data received from the object detector with an inactive track from the list is performed by the object tracking system per inactive track and time unit;

In method 800, the step S606 from the method 600 is implemented by determining S806 a threshold time span in time units using *p, r,* the acceptable false positive rate of the object tracking system and the false positive rate of the re-identification model, wherein a second terminal condition of the one or more terminal conditions comprises a time span of an inactive track exceeding the threshold time span.

The method 800 further comprises S608 and S610 from method 600.

It should be noted that in some examples, the methods of figures 7-8 may be combined into a single method, which would thus lead to two terminal conditions being defined as understood from the above.

In examples, the methods described herein, e.g., the methods 600, 700, 800 can be implemented using a non-transitory computer-readable storage medium having stored thereon instructions for executing these methods when executed on one or more devices with processing capabilities. Suitable processors for the execution of a program of instructions include, by way of example, both general and special purpose microprocessors, and the sole processor or one of multiple processors or cores, of any kind of computer. The processors can be supplemented by, or incorporated in, ASICs (application-specific integrated circuits).

The above embodiments are to be understood as illustrative examples of the disclosure. Further embodiments of the disclosure are envisaged. For example, cumulative matching characteristics (CMC) of the re-ID model may be used to determine the terminal conditions. Furthermore, equivalents and modifications not described above may also be employed without departing from the scope of the disclosure, which is defined in the accompanying claims.

## Claims

1. A method (600, 700, 800) for controlling a list (110) of inactive tracks (302, 304, 306, 308) used for re-identification in an object tracking system (100) comprising an object detector (102), the object tracking systems tracking objects in a scene; the object tracking system comprising a re-identification model (112) used when attempting to associate object detection data (106) received from the object detector with an inactive track from the list, the re-identification model being a metric learning model trained on object detection data, the method comprising:
obtaining (S602), using a decision threshold (206) of the re-identification model, a false positive rate of the re-identification model;
obtaining (S604) an acceptable false positive rate of the object tracking system;
determining (S606), using the acceptable false positive rate of the object tracking system and the false positive rate of the re-identification model, one or more terminal conditions for deleting an inactive track from the list;
determining (S608) that a first inactive track fulfils a terminal condition from the one or more terminal conditions; and
deleting (S610) the inactive track from the list.

2. The method of claim 1, wherein each inactive track in the list is associated with a counter (303, 305, 307, 309) which indicates a number of unsuccessful association attempts for the inactive track, wherein the method further comprises:
determining (S702), using the acceptable false positive rate of the object tracking system and the false positive rate of the re-identification model, a threshold number of association attempts of each the inactive track in the list; wherein a first terminal condition of the one or more terminal conditions comprises the counter exceeding the threshold number of association attempts
obtaining (S704) first object detection data from the object detector; and
evaluating (S706) whether the first object detection data is associated with the first inactive track from the list, wherein upon the object detection data is not associated with the first inactive track from the list, increasing the counter associated with the first inactive track.

3. The method of claim 2, further comprising:
obtaining a plurality of object detection data from the object detector, the plurality of object detection data being associated with a same image frame of a video stream depicting the scene;
for each object detection data of the plurality of object detection data, evaluating whether the object detection data is associated with the first inactive track from the list, wherein upon the object detection data is not associated with the first inactive track from the list, increasing the counter associated with the first inactive track;
wherein the step of determining that a first inactive track fulfils the first terminal condition from the one or more terminal conditions is performed after all object detection data of the plurality of object detection data has been evaluated.

4. The method of any one of claims 2-3, wherein upon the first object detection data is associated with the first inactive track from the list, deleting the first inactive track from the list.

5. The method of any one of claims 2-4, wherein the threshold number is determined by solving the equation *TPR_{model}^{N}* = *TPR_{system}* wherein *TPR_{model}* indicates the true positive rate of the re-identification model, wherein the *TPR_{system}* indicates 1 minus the acceptable false positive rate of the object tracking system and, wherein the threshold number is determined using *N*.

6. The method of any one of claims 2-5, wherein each inactive track in the list is associated with a location data indicating a location in a scene where the inactive track was determined to be inactive by the object tracking system, the method further comprising:
determining first location data from the obtained object detection data;
selecting a subset of inactive tracks from the list based on location data from the first object detection data and the location data associated with each of the inactive tracks in the list; and
for each inactive track in the subset of inactive tracks, evaluating whether the object detection data is associated with the inactive track, wherein upon the object detection data is not associated with the inactive track, increasing the counter associated with the inactive track.

7. The method of any one of claims 2-6, further comprising:
obtaining a maximum number of inactive tracks in the list:
sorting the list of inactive tracks according to their associated counters;
truncating the list to comprise the maximum number of inactive tracks.

8. The method of any one of claims 1-7, wherein each inactive track in the list is associated with a timer (502, 504, 506, 508) indicating a time span since the inactive track was added to the list, wherein the method further comprises:
determining (S802) a current number of objects, *p,* in the scene;
estimating (S804) how many attempts, *r*, to associate object detection data received from the object detector with an inactive track from the list is performed by the object tracking system per inactive track and time unit; and
determining (S806) a threshold time span in time units using *p*, *r*, the acceptable false positive rate of the object tracking system and the false positive rate of the re-identification model, wherein a second terminal condition of the one or more terminal conditions comprises a time span of an inactive track exceeding the threshold time span.

9. The method of claim 8,
wherein the threshold time span, *t,* in time units is determined by solving the equation *TPR_{model}^{r*p*t}* = *TPR_{system},* or
wherein the threshold time span, *t,* in time units is determined by solving the equation *TPR_{model}*^{*R*(*p*)*}*^{t} = TPR_{system},* wherein *R* corresponds to a total number of association attempts that is performed by the object tracking system per time unit and is a function of*p*.

10. The method of claim 8, further comprising: estimating a change, *p',* of the number of objects in the scene per time unit using *p* and historical data indicating counts of objects in the scene at a plurality of points in time;
wherein the threshold time span, *t,* in time units is determined by solving the equation *TPR_{model}*^{*R*(*p'*)*}*^{t} = TPR_{system}* wherein *R* corresponds to a total number of association attempts that is performed by the object tracking system per time unit is a function of*p*'.

11. The method of any one of claims 8-10, further comprising:
obtaining a maximum number of inactive tracks in the list:
sorting the list of inactive tracks according to the time span indicated by their associated timers; and
truncating the list to comprise the maximum number of inactive tracks.

12. The method of any one of claims 2 - 11, further comprising:
obtaining, from a user of the object detection system, an updated acceptable false positive rate of the object tracking system; and
updating, using the updated acceptable false positive rate of the object tracking system, at least one of the threshold number of attempts and the threshold time span.

13. A non-transitory computer-readable storage medium having stored thereon instructions for implementing the method according to any one of claims 1-12 when executed on one or more devices having processing capabilities.

14. An object tracking system comprising an object detector, the object tracking systems tracking objects in a scene; the object tracking system comprising a re-identification model used when attempting to associate object detection data received from the object detector with an inactive track from the list, the re-identification model being a metric learning model trained on object detection data, the object tracking system configured to control a list of inactive tracks used for re-identification by:
obtaining, using a decision threshold of the re-identification model, a false positive rate of the re-identification model;
obtaining an acceptable false positive rate of the object tracking system;
determining, using the acceptable false positive rate of the object tracking system and the false positive rate of the re-identification model, one or more terminal conditions for deleting an inactive track from the list;
determining that a first inactive track fulfils a terminal condition from the one or more terminal conditions; and
deleting the inactive track from the list.

15. The object tracking system of claim 14, connected to a camera capturing a video stream depicting the scene.

## Patentansprüche

1. Verfahren (600, 700, 800) zum Steuern einer Liste (110) von inaktiven Spuren (302, 304, 306, 308), die zur Reidentifizierung in einem Objektverfolgungssystem (100) verwendet werden, das einen Objektdetektor (102) umfasst, wobei das Objektverfolgungssystem Objekte in einer Szene verfolgt; wobei das Objektverfolgungssystem ein Reidentifizierungsmodell (112) umfasst, das verwendet wird beim Versuch, Objektdetektionsdaten (106), die von dem Objektdetektor empfangen werden, mit einer inaktiven Spur aus der Liste zu assoziieren, wobei das Reidentifizierungsmodell ein metrisches Lernmodell ist, das mit Objektdetektionsdaten trainiert ist, wobei das Verfahren Folgendes umfasst:
Erhalten (S602), unter Verwendung einer Entscheidungsschwelle (206) des Reidentifizierungsmodells, einer Falsch-Positiv-Rate des Reidentifizierungsmodells;
Erhalten (S604) einer akzeptablen Falsch-Positiv-Rate des Objektverfolgungssystems;
Bestimmen (S606), unter Verwendung der akzeptablen Falsch-Positiv-Rate des Objektverfolgungssystems und der Falsch-Positiv-Rate des Reidentifizierungsmodells, einer oder mehrerer Endbedingungen zum Löschen einer inaktiven Spur aus der Liste;
Bestimmen (S608), dass eine erste inaktive Spur eine Endbedingung aus der einen oder den mehreren Endbedingungen erfüllt; und
Löschen (S610) der inaktiven Spur aus der Liste.

2. Verfahren nach Anspruch 1, wobei jede inaktive Spur in der Liste mit einem Zähler (303, 305, 307, 309) assoziiert ist, der eine Anzahl erfolgloser Assoziierungsversuche für die inaktive Spur angibt, wobei das Verfahren ferner Folgendes umfasst:
Bestimmen (S702), unter Verwendung der akzeptablen Falsch-Positiv-Rate des Objektverfolgungssystems und der Falsch-Positiv-Rate des Reidentifizierungsmodells, einer Schwellenanzahl von Assoziierungsversuchen jeder der inaktiven Spuren in der Liste; wobei eine erste Endbedingung der einen oder der mehreren Endbedingungen umfasst, dass der Zähler die Schwellenanzahl von Assoziierungsversuchen überschreitet;
Erhalten (S704) von ersten Objektdetektionsdaten vom Objektdetektor; und
Bewerten (S706), ob die ersten Objektdetektionsdaten mit der ersten inaktiven Spur aus der Liste assoziiert sind, wobei, wenn die Objektdetektionsdaten nicht mit der ersten inaktiven Spur aus der Liste assoziiert sind, der Zähler, der mit der ersten inaktiven Spur assoziiert ist, erhöht wird.

3. Verfahren nach Anspruch 2, das ferner Folgendes umfasst:
Erhalten einer Vielzahl von Objektdetektionsdaten vom Objektdetektor, wobei die Vielzahl von Objektdetektionsdaten mit einem gleichen Bildframe eines Videostreams, der die Szene abbildet, assoziiert ist;
für alle Objektdetektionsdaten der Vielzahl von Objektdetektionsdaten, Bewerten, ob die Objektdetektionsdaten mit der ersten inaktiven Spur aus der Liste assoziiert sind, wobei, wenn die Objektdetektionsdaten nicht mit der ersten inaktiven Spur aus der Liste assoziiert sind, der Zähler, der mit der ersten inaktiven Spur assoziiert ist, erhöht wird;
wobei der Schritt des Bestimmens, dass eine erste inaktive Spur die erste Endbedingung aus der einen oder den mehreren Endbedingungen erfüllt, durchgeführt wird, nachdem alle Objektdetektionsdaten der Vielzahl von Objektdetektionsdaten bewertet wurden.

4. Verfahren nach einem der Ansprüche 2-3, wobei, wenn die ersten Objektdetektionsdaten mit der ersten inaktiven Spur aus der Liste assoziiert sind, die erste inaktive Spur aus der Liste gelöscht wird.

5. Verfahren nach einem der Ansprüche 2-4, wobei die Schwellenanzahl durch Lösen der Gleichung *TPR_{Modell}^{N} = TPR_{System}* bestimmt wird, wobei *TPR_{Modell}* die Richtig-Positiv-Rate des Reidentifizierungsmodells angibt, wobei *TPR_{System}* 1 minus die akzeptable Falsch-Positiv-Rate des Objektverfolgungssystems angibt und wobei die Schwellenanzahl unter Verwendung von *N* bestimmt wird.

6. Verfahren nach einem der Ansprüche 2-5, wobei jede inaktive Spur in der Liste mit Positionsdaten assoziiert ist, die eine Position in einer Szene angeben, an der durch das Objektverfolgungssystem bestimmt wurde, dass die inaktive Spur inaktiv ist, wobei das Verfahren ferner Folgendes umfasst:
Bestimmen von ersten Positionsdaten aus den erhaltenen Objektdetektionsdaten;
Auswählen einer Teilmenge von inaktiven Spuren aus der Liste basierend auf Positionsdaten aus den ersten Objektdetektionsdaten und den Positionsdaten, die mit jeder der inaktiven Spuren in der Liste assoziiert sind; und
für jede inaktive Spur in der Teilmenge von inaktiven Spuren, Bewerten, ob die Objektdetektionsdaten mit der inaktiven Spur assoziiert sind, wobei, wenn die Objektdetektionsdaten nicht mit der inaktiven Spur assoziiert sind, der Zähler, der mit der inaktiven Spur assoziiert ist, erhöht wird.

7. Verfahren nach einem der Ansprüche 2-6, das ferner Folgendes umfasst:
Erhalten einer maximalen Anzahl von inaktiven Spuren in der Liste;
Sortieren der Liste inaktiver Spuren gemäß ihren assoziierten Zählern;
Trunkieren der Liste, sodass sie die maximale Anzahl von inaktiven Spuren umfasst.

8. Verfahren nach einem der Ansprüche 1-7, wobei jede inaktive Spur in der Liste mit einem Zeitgeber (502, 504, 506, 508) assoziiert ist, der eine Zeitspanne angibt, seit wann die inaktive Spur zu der Liste hinzugefügt ist, wobei das Verfahren ferner Folgendes umfasst:
Bestimmen (S802) einer aktuellen Anzahl von Objekten, *p*, in der Szene;
Schätzen (S804), wie viele Versuche, *r*, zum Assoziieren von Objektdetektionsdaten, die vom Objektdetektor empfangen werden, mit einer inaktiven Spur aus der Liste von dem Objektverfolgungssystem pro inaktiver Spur und Zeiteinheit durchgeführt werden; und
Bestimmen (S806) einer Schwellenzeitspanne in Zeiteinheiten unter Verwendung von *p, r*, der akzeptablen Falsch-Positiv-Rate des Objektverfolgungssystems und der Falsch-Positiv-Rate des Reidentifizierungsmodells, wobei eine zweite Endbedingung der einen oder der mehreren Endbedingungen umfasst, dass eine Zeitspanne einer inaktiven Spur die Schwellenzeitspanne überschreitet.

9. Verfahren nach Anspruch 8,
wobei die Schwellenzeitspanne, *t*, in Zeiteinheiten durch Lösen der Gleichung *TPR_{Modell}^{r*p*t} = TPR_{System}* bestimmt wird, oder
wobei die Schwellenzeitspanne, *t*, in Zeiteinheiten durch Lösen der Gleichung *TPR_{Modlel}^{R(p)*t} = TPR_{System}* bestimmt wird, wobei *R* einer Gesamtanzahl von Assoziierungsversuchen entspricht, die von dem Objektverfolgungssystem pro Zeiteinheit durchgeführt werden, und eine Funktion von *p* ist.

10. Verfahren nach Anspruch 8, das ferner Folgendes umfasst: Schätzen einer Änderung, *p'*, der Anzahl von Objekten in der Szene pro Zeiteinheit unter Verwendung von *p* und historischen Daten, die Zählungen von Objekten in der Szene zu einer Vielzahl von Zeitpunkten angeben;
wobei die Schwellenzeitspanne, *t*, in Zeiteinheiten durch Lösen der Gleichung *TPR_{Modell}^{R(p')*t} = TPR_{System}* bestimmt wird, wobei *R* einer Gesamtanzahl von Assoziierungsversuchen entspricht, die von dem Objektverfolgungssystem pro Zeiteinheit durchgeführt werden, eine Funktion von *p'* ist.

11. Verfahren nach einem der Ansprüche 8-10, das ferner Folgendes umfasst:
Erhalten einer maximalen Anzahl von inaktiven Spuren in der Liste;
Sortieren der Liste inaktiver Spuren gemäß der Zeitspanne, die von ihren assoziierten Zeitgebern angegeben wird; und
Trunkieren der Liste, sodass sie die maximale Anzahl von inaktiven Spuren umfasst.

12. Verfahren nach einem der Ansprüche 2-11, das ferner Folgendes umfasst:
Erhalten, von einem Benutzer des Objektdetektionssystems, einer aktualisierten akzeptablen Falsch-Positiv-Rate des Objektverfolgungssystems; und
Aktualisieren, unter Verwendung der aktualisierten akzeptablen Falsch-Positiv-Rate des Objektverfolgungssystems, von mindestens einem von der Schwellenanzahl von Versuchen und der Schwellenzeitspanne.

13. Nicht transitorisches computerlesbares Speichermedium, auf dem Anweisungen gespeichert sind, um das Verfahren nach einem der Ansprüche 1-12 bei Ausführung auf einer oder mehreren Vorrichtungen mit Verarbeitungsfähigkeiten zu implementieren.

14. Objektverfolgungssystem, das einen Objektdetektor umfasst, wobei das Objektverfolgungssystem Objekte in einer Szene verfolgt; wobei das Objektverfolgungssystem ein Reidentifizierungsmodell umfasst, das verwendet wird beim Versuch, Objektdetektionsdaten, die von dem Objektdetektor empfangen werden, mit einer inaktiven Spur aus der Liste zu assoziieren, wobei das Reidentifizierungsmodell ein metrisches Lernmodell ist, das mit Objektdetektionsdaten trainiert ist, wobei das Objektverfolgungssystem konfiguriert ist, um eine Liste inaktiver Spuren, die zur Reidentifizierung verwendet werden, durch Folgendes zu steuern:
Erhalten, unter Verwendung einer Entscheidungsschwelle des Reidentifizierungsmodells, einer Falsch-Positiv-Rate des Reidentifizierungsmodells;
Erhalten einer akzeptablen Falsch-Positiv-Rate des Objektverfolgungssystems;
Bestimmen, unter Verwendung der akzeptablen Falsch-Positiv-Rate des Objektverfolgungssystems und der Falsch-Positiv-Rate des Reidentifizierungsmodells, einer oder mehrerer Endbedingungen zum Löschen einer inaktiven Spur aus der Liste;
Bestimmen, dass eine erste inaktive Spur eine Endbedingung aus der einen oder den mehreren Endbedingungen erfüllt; und
Löschen der inaktiven Spur aus der Liste.

15. Objektverfolgungssystem nach Anspruch 14, das mit einer Kamera verbunden ist, die einen Videostream erfasst, der die Szene abbildet.

## Revendications

1. Procédé (600, 700, 800) de gestion d'une liste (110) de pistes inactives (302, 304, 306, 308) utilisée pour la réidentification dans un système de suivi d'objets (100) comprenant un détecteur d'objets (102), le système de suivi d'objets suivant des objets dans une scène ; le système de suivi d'objets comprenant un modèle de réidentification (112) utilisé lors d'une tentative d'association de données de détection d'objets (106) reçues du détecteur d'objets à une piste inactive de la liste, le modèle de réidentification étant un modèle d'apprentissage métrique entraîné sur des données de détection d'objets, le procédé comprenant :
l'obtention (S602), au moyen d'un seuil de décision (206) du modèle de réidentification, d'un taux de faux positifs du modèle de réidentification ;
l'obtention (S604) d'un taux de faux positifs acceptable du système de suivi d'objets ;
la détermination (S606), au moyen du taux de faux positifs acceptable du système de suivi d'objets et du taux de faux positifs du modèle de réidentification, d'une ou de plusieurs conditions terminales pour la suppression d'une piste inactive de la liste ;
la détermination (S608) qu'une première piste inactive satisfait à une condition terminale parmi la ou les conditions terminales ; et
la suppression (S610) de la piste inactive de la liste.

2. Procédé selon la revendication 1, dans lequel chaque piste inactive de la liste est associée à un compteur (303, 305, 307, 309) qui indique un nombre de tentatives d'association infructueuses pour la piste inactive, le procédé comprenant en outre :
la détermination (S702), au moyen du taux de faux positifs acceptable du système de suivi d'objets et du taux de faux positifs du modèle de réidentification, d'un nombre seuil de tentatives d'association de chaque piste inactive de la liste ; une première condition terminale parmi la ou les conditions terminales comprenant le dépassement, par le compteur, du nombre seuil de tentatives d'association ;
l'obtention (S704) de premières données de détection d'objets auprès du détecteur d'objets ; et
l'évaluation (S706) si les premières données de détection d'objets sont associées à la première piste inactive de la liste de sorte que, lorsque les données de détection d'objets ne sont pas associées à la première piste inactive de la liste, le compteur associé à la première piste inactive est incrémenté.

3. Procédé selon la revendication 2, comprenant en outre :
l'obtention d'une pluralité de données de détection d'objets auprès du détecteur d'objets, la pluralité de données de détection d'objets étant associée à une même image individuelle d'un flux vidéo représentant la scène ;
pour chaque donnée de détection d'objets de la pluralité de données de détection d'objets, l'évaluation si les données de détection d'objets sont associées à la première piste inactive de la liste de sorte que, lorsque les données de détection d'objets ne sont pas associées à la première piste inactive de la liste, le compteur associé à la première piste inactive est incrémenté ;
dans lequel l'étape de détermination qu'une première piste inactive satisfait à la première condition terminale parmi la ou les conditions terminales est réalisée après que toutes les données de détection d'objets de la pluralité de données de détection d'objets ont été évaluées.

4. Procédé selon l'une quelconque des revendications 2 à 3, dans lequel, lorsque les premières données de détection d'objets sont associées à la première piste inactive de la liste, la première piste inactive est supprimée de la liste.

5. Procédé selon l'une quelconque des revendications 2 à 4, dans lequel le nombre seuil est déterminé par résolution de l'équation TPR_{model}^{N} = TPR_{system}, où TPR_{model} indique le taux de vrais positifs du modèle de réidentification, où TPR_{system} indique 1 moins le taux de faux positifs acceptable du système de suivi d'objets et où le nombre seuil est déterminé au moyen de N.

6. Procédé selon l'une quelconque des revendications 2 à 5, dans lequel chaque piste inactive de la liste est associée à des données d'emplacement indiquant un emplacement dans une scène où la piste inactive a été déterminée comme étant inactive par le système de suivi d'objets, le procédé comprenant en outre :
la détermination de premières données d'emplacement à partir des données de détection d'objets obtenues ;
la sélection d'un sous-ensemble de pistes inactives dans la liste sur la base de données d'emplacement issues des premières données de détection d'objets et des données de localisation associées à chacune des pistes inactives de la liste ; et
pour chaque piste inactive du sous-ensemble de pistes inactives, l'évaluation si les données de détection d'objets sont associées à la piste inactive de sorte que, lorsque les données de détection d'objets ne sont pas associées à la piste inactive, le compteur associé à la piste inactive est incrémenté.

7. Procédé selon l'une quelconque des revendications 2 à 6, comprenant en outre :
l'obtention d'un nombre maximal de pistes inactives de la liste ;
le tri de la liste des pistes inactives selon leurs compteurs associés ;
la troncature de la liste afin qu'elle comprenne le nombre maximal de pistes inactives.

8. Procédé selon l'une quelconque des revendications 1 à 7, dans lequel chaque piste inactive de la liste est associée à un temporisateur (502, 504, 506, 508) indiquant une durée écoulée depuis que la piste inactive a été ajoutée à la liste, le procédé comprenant en outre :
la détermination (S802) d'un nombre courant d'objets, p, dans la scène ;
l'estimation (S804) du nombre de tentatives, r, d'association de données de détection d'objets reçues du détecteur d'objets à une piste inactive de la liste qui est réalisé par le système de suivi d'objets par piste inactive et par unité de temps ; et
la détermination (S806) d'une durée seuil en unités de temps au moyen de p, de r, du taux de faux positifs acceptable du système de suivi d'objets et du taux de faux positifs du modèle de réidentification, une deuxième condition terminale parmi la ou les conditions terminales comprenant le dépassement, par une durée d'une piste inactive, de la durée seuil.

9. Procédé selon la revendication 8,
dans lequel la durée seuil, t, en unités de temps est déterminée par résolution de l'équation TPR_{model}^{r*p*t} = TPR_{system}, ou
dans lequel la durée seuil, t, en unités de temps est déterminée par résolution de l'équation TPR_{model}^{R(p)*t} = TPR_{system}, où R correspond à un nombre total de tentatives d'association qui est réalisé par le système de suivi d'objets par unité de temps et est fonction de p.

10. Procédé selon la revendication 8, comprenant en outre : l'estimation d'une variation, p', du nombre d'objets dans la scène par unité de temps au moyen de p et de données historiques indiquant des comptages d'objets dans la scène à une pluralité d'instants ;
dans lequel la durée seuil, t, en unités de temps est déterminée par résolution de l'équation TPR_{model}^{R(p')*t} = TPR_{system} où R correspond à un nombre total de tentatives d'association qui est réalisé par le système de suivi d'objets par unité de temps et est fonction de p'.

11. Procédé selon l'une quelconque des revendications 8 à 10, comprenant en outre :
l'obtention d'un nombre maximal de pistes inactives de la liste ;
le tri de la liste de pistes inactives selon la durée indiquée par leurs temporisateurs associés ; et
la troncature de la liste afin qu'elle comprenne le nombre maximal de pistes inactives.

12. Procédé selon l'une quelconque des revendications 2 à 11, comprenant en outre :
l'obtention, auprès d'un utilisateur du système de détection d'objets, d'un taux de faux positifs acceptable mis à jour du système de suivi d'objets ; et
la mise à jour, au moyen du taux de faux positifs acceptable mis à jour du système de suivi d'objets, du nombre seuil de tentatives et/ou de la durée seuil.

13. Support de stockage non transitoire lisible par ordinateur sur lequel sont stockées des instructions destinées à mettre en œuvre le procédé selon l'une quelconque des revendications 1 à 12 lorsqu'elles sont exécutées sur un ou plusieurs dispositifs dotés de capacités de traitement.

14. Système de suivi d'objets comprenant un détecteur d'objets, le système de suivi d'objets suivant des objets dans une scène ; le système de suivi d'objets comprenant un modèle de réidentification utilisé lors d'une tentative d'association de données de détection d'objets reçues du détecteur d'objets à une piste inactive de la liste, le modèle de réidentification étant un modèle d'apprentissage métrique entraîné sur des données de détection d'objets, le système de suivi d'objets étant configuré pour gérer une liste de pistes inactives utilisée pour la réidentification par :
l'obtention, au moyen d'un seuil de décision du modèle de réidentification, d'un taux de faux positifs du modèle de réidentification ;
l'obtention d'un taux de faux positifs acceptable du système de suivi d'objets ;
la détermination, au moyen du taux de faux positifs acceptable du système de suivi d'objets et du taux de faux positifs du modèle de réidentification, d'une ou de plusieurs conditions terminales pour la suppression d'une piste inactive de la liste ;
la détermination qu'une première piste inactive satisfait à une condition terminale parmi la ou les conditions terminales ; et
la suppression de la piste inactive de la liste.

15. Système de suivi d'objets selon la revendication 14, connecté à une caméra capturant un flux vidéo représentant la scène.
